## Europäisches Patentamt
## European Patent Office
## Office européen des brevets

(19)

(11) Numéro de publication : **0 187 687**
**B1**

(12)
# FASCICULE DE BREVET EUROPÉEN

(45) Date de publication du fascicule du brevet :
23.11.89

(51) Int. Cl.⁴ : **G 01 S 17/02, G 01 S 7/48**

(21) Numéro de dépôt : **86200012.2**

(22) Date de dépôt : **08.01.86**

(54) Analyseur optico-mécanique ayant un champ de télémétrie fixe.

(30) Priorité : 11.01.85 FR 8500339

(43) Date de publication de la demande :
16.07.86 Bulletin 86/29

(45) Mention de la délivrance du brevet :
23.11.89 Bulletin 89/47

(84) Etats contractants désignés :
BE DE FR GB IT NL

(56) Documents cités :
DE–A– 3 104 318
US–A– 3 698 812

(73) Titulaire : **TELECOMMUNICATIONS RADIOELECTRI-
QUES ET TELEPHONIQUES T.R.T.
88, rue Brillat Savarin
F-75013 Paris (FR)
FR
N.V. Philips' Gloeilampenfabrieken
Groenewoudseweg 1
NL-5621 BA Eindhoven (NL)
BE DE GB IT NL**

(72) Inventeur : **Loy, Fernand
SOCIETE CIVILE S.P.I.D. 209 rue de l'Université
F-75007 Paris (FR)**

(74) Mandataire : **Chaffraix, Jean et al
Société Civile S.P.I.D. 209, rue de l'Université
F-75007 Paris (FR)**

## Description

L'invention concerne un analyseur optico-mécanique à fonction d'imagerie et fonction de télémétrie associées, ledit analyseur comportant un vase Dewar, un détecteur d'imagerie agencé dans le vase Dewar, un système optique d'imagerie pour fournir l'image d'une scène sur le détecteur d'imagerie ledit système optique comportant, un élément de balayage ligne pour produire un déplacement de l'image de la scène sur le détecteur d'imagerie dans la direction des lignes et un élément de balayage trame pour produire un déplacement de l'image de la scène sur le détecteur d'imagerie dans le sens de la trame transversalement à la direction des lignes, une source laser à impulsions fournissant un faisceau de télémétrie, un détecteur de télémétrie agencé dans le vase Dewar, un système optique de focalisation pour focaliser le faisceau de télémétrie réfléchi par un objet de la scène sur le détecteur de télémétrie, le système d'imagerie et le système de focalisation comportant un système optique d'entrée commun constitué par un objectif et une pupille d'entrée, pour recevoir à la fois le faisceau d'imagerie relatif à la scène et le faisceau de télémétrie.

On connaît des systèmes d'imagerie thermique dans lesquels la scène est analysée point par point au moyen d'un analyseur optico-mécanique. Ces caméras thermiques sont en général équipées d'optiques infra-rouge de grand diamètre.

Lorsque la caméra thermique est associée à un télémètre laser, les optiques d'émission et de réception du télémètre ont aussi de grands diamètres.

Afin de réduire les dimensions et le prix de l'ensemble, il est avantageux d'utiliser la même optique pour l'imagerie thermique et la réception laser. L'émission laser est extérieure à la caméra thermique ; elle utilise une optique dont l'axe est parallèle à l'axe de réception laser.

Il est aussi avantageux, comme il est mentionné dans le préambule, de placer dans le même vase Dewar les détecteurs d'imagerie et de télémétrie de façon à n'avoir à refroidir qu'un seul vase.

On peut imaginer d'avoir un trajet commun pour l'imagerie et la réception de télémétrie depuis l'optique d'entrée jusqu'au détecteur. Ceci est possible pour les analyseurs qui n'ont qu'une direction de balayage. C'est le cas des analyseurs à « balayage parallèle » qui ont autant de détecteurs que de lignes balayées parce que le balayage est lent.

Dans le cas des analyseurs à « balayage série ou série-parallèle » tel que celui décrit dans le préambule qui ont deux directions de balayage comme en télévision classique, on a un balayage ligne très rapide et un balayage trame plus lent. La direction du champ analysé varie très rapidement dans le sens ligne au point que pendant le temps de propagation aller et retour de l'impulsion laser, la direction du champ de réception laser a tourné d'un angle égal à plusieurs fois le champ du laser.

Pour éviter ce défaut, on peut par exemple contourner le balayage ligne en plaçant des lames dichroïques qui réfléchissent le rayonnement laser et transmettent le reste du spectre.

On peut aussi interposer des éléments optiques commutables.

Il en résulte les inconvénients d'avoir des pièces absorbantes comme les lames dichroïques ou des éléments commutables toujours difficiles à mettre en œuvre lorsqu'il s'agit de conserver une harmonisation précise.

Le but de l'invention est de pallier ces inconvénients en procurant un dispositif remarquable en ce que entre l'élément de balayage trame et l'élément de balayage ligne est agencé un miroir de renvoi qui sépare spatialement lors de leurs réflexions respectives le faisceau de télémétrie et le faisceau d'imagerie et qui dirige ledit faisceau d'imagerie vers l'élément de balayage ligne et le faisceau de télémétrie à l'écart de cet élément et en ce que des moyens de synchronisation sont prévus pour faire en sorte que ladite source laser émette des impulsions de faisceau de télémétrie pour une position spécifique de l'élément de balayage trame.

Cette disposition est particulièrement adaptée au Système Modulaire de Thermographie SMT.. Toutefois le même principe peut être appliqué à d'autres systèmes d'analyse.

La description suivante en regard des dessins annexés, le tout donné à titre d'exemple fera bien comprendre comment l'invention peut être réalisée.

La figure 1 est le schéma de principe d'un mode de réalisation de l'analyseur optico-mécanique selon l'invention.

La figure 2 représente la forme du diaphragme froid des détecteurs.

La figure 3 représente le même schéma de principe de l'analyseur optico-mécanique selon l'invention et remplissant les conditions pour lesquelles tout le faisceau de télémétrie passe à l'intérieur du diaphragme froid dimensionné pour le faisceau d'imagerie.

La figure 4 montre l'emplacement du faisceau de télémétrie à l'intérieur du diaphragme froid dans le cas de la figure 3.

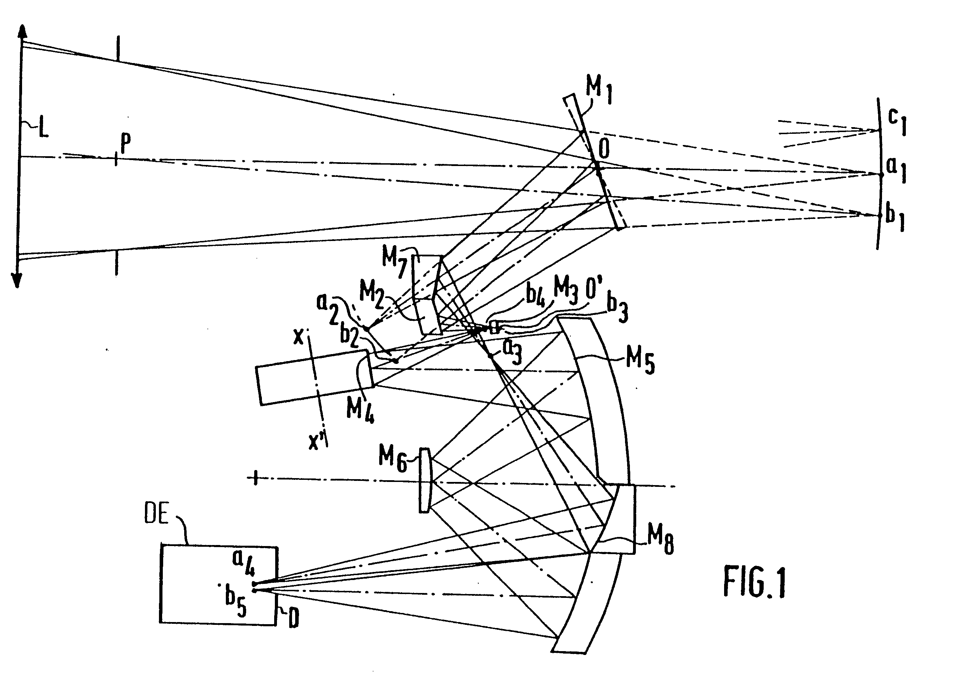

Le système d'analyse optico-mécanique représenté sur la figure 1 consiste selon l'invention à avoir deux trajets optiques différents pour les voies d'imagerie et de télémétrie sans commutation d'éléments optiques ni réduction sensible des performances de chacune des voies.

La voie d'imagerie traverse l'analyseur trame et l'analyseur ligne tandis que la voie de télémétrie traverse seulement l'analyseur trame.

La fonction imagerie comprend les éléments optiques suivants :

la pupille de sortie p de l'objectif L commun aux deux voies,

le miroir trame M1 mobile autour de l'axe 0 perpendiculaire au plan de la figure,

le champ vertical de l'objectif $a_1$, $b_1$, $c_1$ lieu de convergence des faisceaux issus de la pupille de sortie,

le miroir de renvoi M2,

le miroir de champ sphérique M3, orientable en synchronisme avec M1 autour d'un axe 0' perpendiculaire au plan de la figure.

le polygone d'analyse ligne M4 tournant autour de l'axe XX' situé dans le plan de la figure,

le transport d'image M5 + M6 constitué par des miroirs sphériques.

Le miroir M5 est un miroir sphérique concave dans lequel on a pratiqué une ouverture destinée à recevoir un autre élément optique utilisé pour la fonction télémétrie, le miroir M6 est un miroir sphérique convexe concentrique à M5.

Le mouvement du miroir trame M1 peut être négligé vis-à-vis de l'étendue du champ de télémétrie pendant le temps de propagation de l'écho laser qui est au plus égal à 60 $\mu$s pour une distance de cible inférieure à 9 km.

Le miroir trame M1 est représenté en trait plein dans la position où le point de convergence $b_1$ du faisceau d'imagerie issu de P est situé à la limite inférieure du champ vertical.

Le faisceau réfléchi sur le miroir trame M1 est renvoyé par M2 sur le miroir de champ M3 qui le projette sur une face M4 du polygone d'analyse ligne. Le faisceau issu de M4 est transmis successivement sur la partie supérieure de M5 puis sur M6 et enfin sur la partie inférieure de M5 où il se réfléchit en un faisceau qui converge sur le système de détection d'imagerie constitué par une mosaïque de détecteurs par exemple.

$b_2$ est l'image de $b_1$ donnée par M1
$b_3$ est l'image de $b_2$ donnée par M2,
$b_4$ est l'image de $b_3$ donnée par M3,
$b_5$, l'image de $b_4$ obtenue après passage du faisceau sur l'analyseur ligne M4 et transport par M5 et M6 est aussi le point d'emplacement du détecteur d'imagerie.

La fonction de télémétrie comprend les éléments optiques suivants ;

la pupille de sortie P de l'objectif,
le miroir trame M1,
le miroir plan de renvoi M7,
le miroir elliptique M8 inséré dans l'ouverture pratiquée dans le miroir sphérique M5,

$a_1$ est le point de convergence dans le champ vertical du faisceau de télémétrie issu de P. Ce faisceau réfléchi sur le miroir trame M1 est renvoyé par M7 sur le miroir elliptique M8. Le faisceau réfléchi par M8 converge sur le détecteur de télémétrie.

$a_2$ est l'image de $a_1$ donnée par M1,
$a_3$ est l'image de $a_2$ donnée par M7,
$a_4$, l'image de $a_3$ obtenue après transport par M8, est aussi l'emplacement du détecteur de télémétrie.

$a_3$ et $a_4$ sont de plus les foyers du miroir elliptique M8.

On remarque sur la figure 1 que pour la position du miroir trame M1 qui est représentée, les points du champ d'imagerie $b_1$ et de télémétrie $a_1$ sont différents. Cela signifie qu'à l'instant où le champ de télémétrie $a_1$ est au centre du champ de la caméra, c'est le point $b_1$ du champ qui est analysé par la voie d'imagerie. Il faut noter que le champ de télémétrie n'est pas nécessairement situé au centre du champ. Il est possible de le placer n'importe où entre $b_1$ et $c_1$ ($c_1$ étant la limite supérieure du champ d'imagerie pour la position du miroir M1 indiquée en pointillés sur la figure). Il suffit de déclencher le tir laser lorsque M1 passe dans la position correspondante.

La source émettrice de l'écho de télémétrie est par exemple un laser à $CO_2$ émettant à 10,6 $\mu$m pour les caméras fonctionnant dans la bande 8-12 $\mu$m.

Les détecteurs d'imagerie et de télémétrie sont placés dans le même vase Dewar DE de façon à n'avoir qu'un seul système cryogénique.

Les faisceaux d'imagerie et de télémétrie convergeant respectivement en $b_5$ et $a_4$ sont superposés et le diaphragme froid D limite le champ de vue des détecteurs au champ de vue utile.

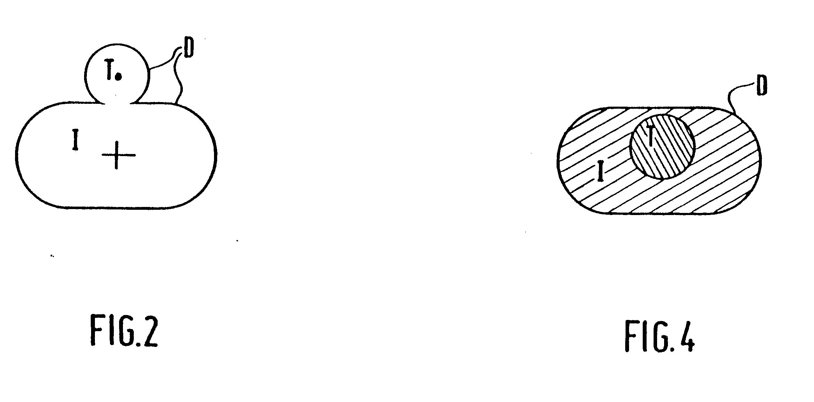

La forme de ce diaphragme représentée sur la figure 2 montre deux découpes l'une inférieure pour le faisceau d'imagerie I et l'autre supérieure pour le faisceau de télémétrie T.

Il est possible de s'arranger pour que tout le faisceau de télémétrie passe dans le diaphragme froid dont les dimensions sont déterminées par la voie d'imagerie et ne modifie pas ainsi la détectivité du détecteur d'imagerie. Pour cela deux conditions sont à remplir :

1. Le transport d'image d'imagerie doit avoir un grandissement différent de celui du transport d'image de télémétrie de telle façon que pour le même diamètre de pupille d'entrée en imagerie et en télémétrie, l'ouverture du faisceau qui converge sur le détecteur de télémétrie est plus petite que l'ouverture du faisceau qui converge sur le détecteur d'imagerie.

2. Les positions respectives des détecteurs d'imagerie et de télémétrie doivent être convenablement choisies dans le vase Dewar pour que le faisceau de télémétrie passe à l'intérieur du diaphragme froid dont les dimensions sont déterminées par la voie d'imagerie.

Dans ces conditions, l'adjonction de la voie de télémétrie ne modifie pas les performances de la voie d'imagerie.

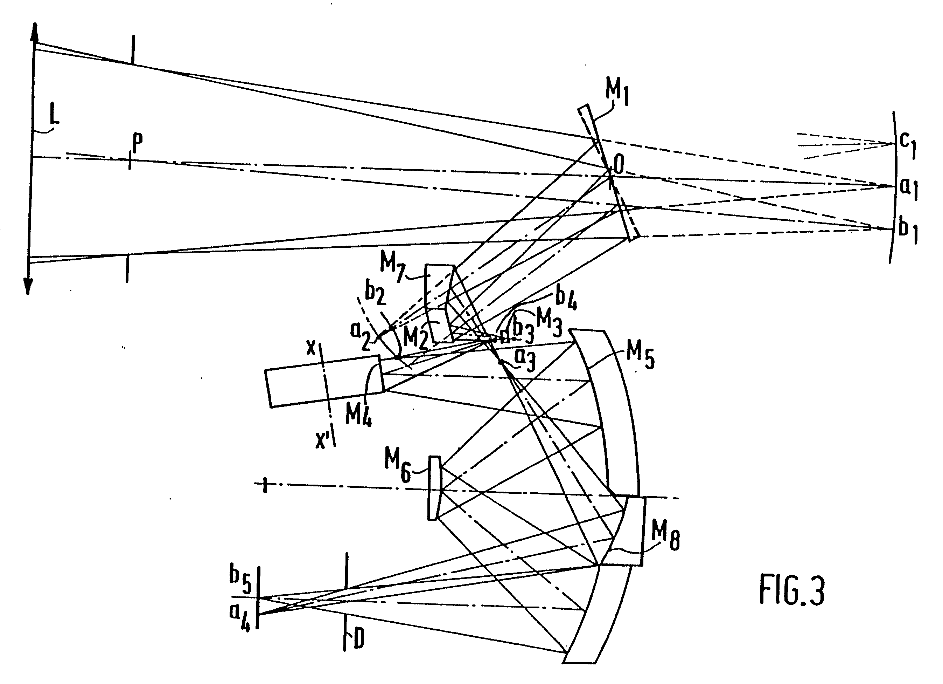

La figure 3 représente le schéma d'un dispositif identique à celui de la figure 1 et répondant à ces conditions.

La figure 4 montre l'emplacement du faisceau de télémétrie T à l'intérieur du diaphragme froid D dimensionné pour laisser passer le faisceau d'imagerie I.

## Revendications

1. Analyseur optico-mécanique à fonction d'imagerie et fonction de télémétrie associées, ledit analyseur comportant un vase Dewar (DE), un détecteur d'imagerie ($b_5$) agencé dans le vase Dewar, un système optique d'imagerie pour fournir l'image d'une scène sur le détecteur d'imagerie, ledit système optique comportant un élément de balayage ligne (M4) pour produire un déplacement de l'image de la scène sur le détecteur d'imagerie dans la direction des lignes et un élément de balayage trame (M1) pour produire un déplacement de l'image de la scène sur le détecteur d'imagerie dans le sens de la trame transversalement à la direction des lignes, une source laser à impulsions fournissant un faisceau de télémétrie, un détecteur de télémétrie ($a_4$) agencé dans le vase Dewar (DE), un système optique de focalisation pour focaliser le faisceau de télémétrie réfléchi par un objet de la scène sur le détecteur de télémétrie, le système d'imagerie et le système de focalisation comportant un système optique d'entrée commun constitué par un objectif (L) et une pupille d'entrée (P), pour recevoir à la fois le faisceau d'imagerie relatif à la scène et le faisceau de télémétrie, caractérisé en ce que, entre l'élément de balayage trame (M1) et l'élément de balayage ligne (M4) est agencé un miroir de renvoi (M2, M7) qui sépare spatialement lors de leurs réflexions respectives le faisceau de télémétrie et le faisceau d'imagerie et qui dirige ledit faisceau d'imagerie vers l'élément de balayage ligne (M4) et le faisceau de télémétrie à l'écart de cet élément (M4) et en ce que des moyens de synchronisation sont prévus pour faire en sorte que ladite source laser émette des impulsions de faisceau de télémétrie pour une position spécifique de l'élément de balayage trame.

2. Analyseur optico-mécanique selon la revendication 1, caractérisé en ce que ledit système optique d'imagerie et ledit système optique de focalisation comportent, de ladite pupille d'entrée (P) vers les détecteurs ($b_5$, $a_4$) :

pour le faisceau d'imagerie :

un miroir plan dit de balayage trame (M1) mobile autour d'un axe perpendiculaire au plan de symétrie dudit analyseur qui constitue ledit élément de balayage trame, un premier miroir plan (M2) faisant partie dudit miroir de renvoi, un miroir sphérique dit miroir de champ (M3), un polygone tournant (M4) de balayage ligne mobile autour d'un axe (X, X') situé dans le plan de symétrie de l'analyseur qui constitue ledit élément de balayage ligne, deux miroirs sphériques concentriques, le premier concave (M5) et le deuxième convexe (M6), et qui assurent la convergence dudit faisceau d'imagerie sur ledit détecteur d'imagerie ($b_5$),

pour le faisceau de télémétrie :

ledit miroir plan de balayage trame, un deuxième miroir plan (M7) faisant partie dudit miroir de renvoi, un miroir elliptique (M8) inséré dans une ouverture pratiquée dans ledit deuxième miroir sphérique concave (M5) et qui assure la convergence dudit faisceau de télémétrie sur ledit détecteur de télémétrie ($a_4$).

## Claims

1. An opto-mechanical scanner having a scanning function and an associated ranging function, said scanner comprising a Dewar vessel (DE), a scanning detector (b5) arranged in the Dewar vessel, an optical imaging system for forming the image of a scene on the scanning detector, said optical system comprising a line-scanning means (M4) for shifting the image of the scene over the scanning detector in the line direction, and a frame-scanning means (M1) for shifting the image of the scene over the scanning detector in the frame direction transversely to the line direction, a pulse laser source providing a ranging beam, a ranging detector (a4) arranged in the Dewar vessel (DE) an optical focusing system for focusing the ranging beam reflected by an object of the scene over the ranging detector, the imaging and focusing systems comprising a common entrance optical system constituted by an objective (L) and an entrance pupil (P) for simultaneously receiving the scanning beam relating to the scene and the ranging beam, characterized in that a diverting mirror (M2, M7) is arranged between the frame-scanning means (M1) and the line-scanning means (M4), which mirror spatially separates the ranging beam and the imaging beam at the instant of their respective reflections and which directs the said imaging beam towards the line-scanning means (M4) and the ranging beam at a distance from said means (M4), and in that synchronizing means are provided for making the said laser source emit ranging beam pulses for a specific position of the frame scanning means.

2. An opto-mechanical scanner as claimed in Claim 1, characterized in that from the entrance pupil (P) towards the detectors (b5, a4), said optical imaging system and optical focusing system comprise :

for the imaging beam :

a plane mirror, or frame-scanning mirror (M1), which is movable about an axis perpendicular to the plane of symmetry of said scanner which constitutes said frame-scanning means, a first plane mirror (M2) forming part of the said diverting mirror, a spherical field mirror (M3), a line-scanning rotating polygon (M4) which is movable about an axis (X, X') which extends in the plane of symmetry of the scanner which constitutes said line-scanning means, two concentric spherical mirrors, the first concave (M5) and the second convex (M6), which converge said imaging beam on said image detector (b5),

for the ranging beam :

said plane frame-scanning mirror, a second plane mirror (M7) forming part of said diverting mirror, an elliptical mirror (M8) arranged in an opening in said second concave spherical mirror (M5) and which converges said ranging beam on said ranging detector (a4).

**Patentansprüche**

1. Optisch-mechanische Abtasteinheit mit zugeordneten Abbildungs- und Entfernungsmessungsfunktionen, wobei diese Abtasteinheit ein Dewar-Gefäß (DE), einen Abbildungsdetektor (b$_5$) im Dewar-Gefäß, ein optisches Abbildungssystem zum Erzeugen des Bildes einer Szene auf den Abbildungsdetektor, wobei das Abbildungssystem ein Zeilenabtastelement (M4) zum Verschieben des Szenenbildes über den Abbildungsdetektor in Zeilenrichtung und ein Bildrasterabtastelement (M1) zum Verschieben des Szenenbildes über den Abbildungsdetektor senkrecht zur Zeilenabtastrichtung, eine Impulslaserquelle zum Ausgeben eines Entfernungsmeßstrahls, einen Entfernungsmeßdetektor (a$_4$) im Dewar-Gefäß (DE), und ein optisches Fokussiersystem zum Fokussieren des von einem Objekt der Szene reflektierten Entfernungsmeßstrahls auf den Entfernungsmeßdetektor enthält, wobei das Abbildungssystem und das Fokussiersystem ein gemeinsames optisches Eingangssystem enthalten, das aus einem Objektiv (L) und aus einer Eingangspupille (P) besteht, um gleichzeitig den Abbildungsstrahl der Szene und den Entfernungsmeßstrahl zu empfangen, dadurch gekennzeichnet, daß zwischen dem Bildrasterabtastelement (M1) und dem Zeilenabtastelement (M4) ein Umlenkspiegel (M2, M7) vorgesehen ist, der bei den jeweiligen Reflexionen räumlich den Entfernungsmeßstrahl und den Abbildungsstrahl voneinander trennt und den Abbildungsstrahl auf den Zeilenabtastelement (M4) richtet und den Entfernungsmeßstrahl von diesem Element (M4) wegführt, und daß Synchronisationsmittel vorgesehen sind zum bewirken daß die Laserquelle Entfernungsmeßstrahlungsimpulse aussenart wenn das Rasterbildabtastelement eine spezifische Position einnimmt.

2. Optisch-mechanische Abtasteinheit nach Anspruch 1, dadurch gekennzeichnet, daß das optische Abbildungssystem und das optische Fokussiersystem zwischen der Eingangspupille (P) und den Detektoren (b$_5$, a$_4$) folgende Elemente enthalten

für den Abbildungsstrahl

einen flachen Spiegel (M1), der um eine senkrechte Achse in bezug auf die Symmetrieebene der Abtasteinheit bewegbar ist und das Bildrasterabtastelement darstellt, eine erste Spiegelfläche (M2) die ein Teil des Umlenkspiegels ist, einen sphärischen Feldspiegel (M3), ein drehendes Vieleck (M4) zur Zeilenabtastung, das um eine Achse (X, X') in der Symmetrieebene der Abtasteinheit bewegbar ist und das Zeilenabtastelement darstellt, zwei sphärische konzentrische Spiegel, von denen der erste konkav (M5) und der zweite konvex ist (M6), und die das konvergieren des Abbildungsstrahls auf den Abbildungsdetektor (b$_5$) gewährleisten,

für den Entfernungsmeßstrahl

den flachen Bildrasterabtastspiegel, einen zweiten flachen Spiegel (M7) den ein Teil des Umlenkspiegels ist, einen elliptischen Spiegel (M8), der in einer Öffnung des zweitem sphärischen konkaven Spiegel (M5) angebracht ist und das Konvergieren des Entfernungsmeßstrahls auf den Entfernungsmeßdetektor (a$_4$) gewährleistet.

FIG.1

FIG.2

FIG.4

EP 0 187 687 B1

FIG.3